# FASCICULE DE BREVET EUROPEEN

(11) **EP 2 619 448 B1**
(45) Date de publication et mention de la délivrance du brevet: **13.08.2014**
(21) Numéro de dépôt: 10774316.3
(22) Date de dépôt: 06.10.2010
(51) Int. Cl.: F03D 3/06, F03D 5/00, F03D 1/06

(54) **SYSTEME DE CONVERSION DE L'ENERGIE EOLIENNE**
SYSTEM ZUR UMWANDLUNG VON WINDENERGIE
SYSTEM FOR CONVERTING WIND ENERGY

(30) Priorité: 22.09.2010 TN 10433
(43) Date de publication de la demande: 31.07.2013
(73) Titulaire: Saphon Energy Ltd, 2092 El Manar 2 (TN)
(72) Inventeur: AOUINI, Anis, M., Tunis (TN)
(74) Mandataire: Delaval, Guillaume Laurent
(86) Numéro de dépôt international: PCT/TN2010/000005
(87) Numéro de publication internationale: WO 2012/039688

(56) Documents cités:
- WO-A2-2010/147301
- DE-A1-102005 014 026
- US-A- 3 957 397

## Description

L'invention, sujet de cette description technique, consiste en un Système de Conversion de l'Energie Eolienne (SCEE) en une énergie mécanique puis hydraulique et électrique.

Ce système de conversion de l'énergie éolienne (SCEE), décrit ci-dessous, n'est pas soumis à la limite théorique de Betz (59%). Par conséquent, cette invention offre un rendement largement supérieur à celui des éoliennes utilisées actuellement, telles que divulguées par exemple dans US-3957397.

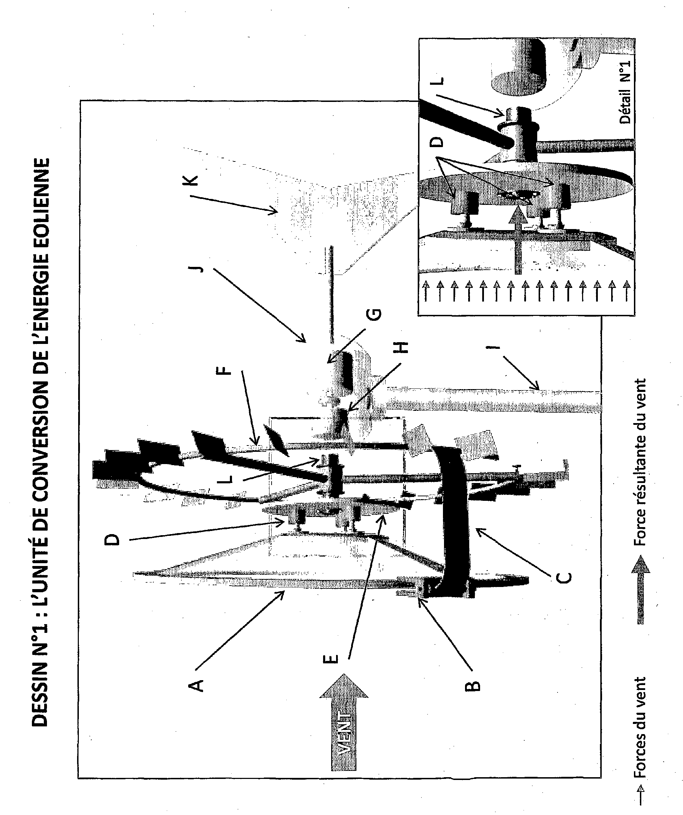

Le système (SCEE) dispose d'une roue (F) munie d'une série de pales disposées tout autour (Voir dessin N°1). La roue (F) tourne en liaison pivot autour d'un axe (L) fixe et ce, grâce à l'énergie cinétique du vent qui traverse les pales, offrant ainsi à la roue (F) une énergie mécanique de rotation.

Encastré à l'axe (L), un support (E), assez rigide, assure la fixation des flasques (ou du fond arrière) d'une série de vérins à double effet (D). Cette dernière peut être composée d'un ou de plusieurs vérins à double effet (Voir dessin N°1). Afin de simplifier la présente description, ce système (SCEE) dispose d'une série de trois vérins à double effet. La répartition et le positionnement de la série des vérins à double effet (D) sur le support (E) doivent être assurés d'une façon bien définie afin de garantir un fonctionnement meilleur (Voir détail N°1 du dessin N-1).

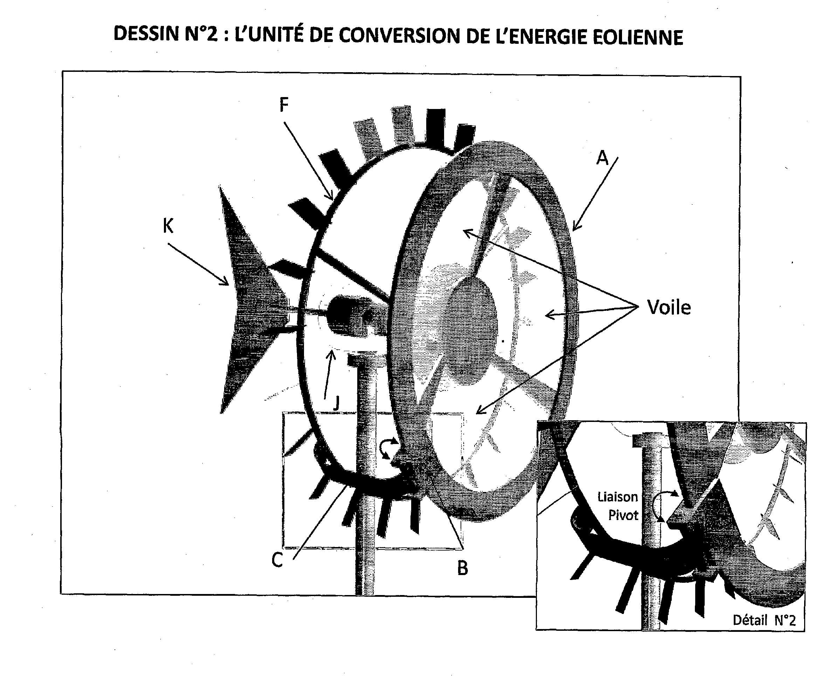

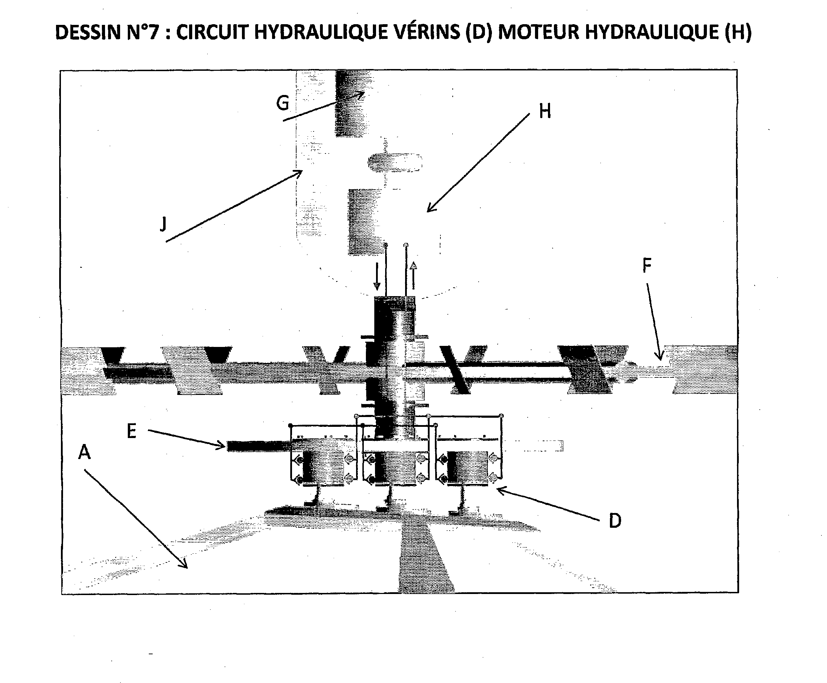

Les tiges des pistons de la série des vérins à double effet (D) sont en liaison rotule avec le corps (A) afin d'offrir à ce dernier un maximum de degré de liberté dans l'espace, à l'exception du mouvement de rotation par rapport à l'axe (L) que la chaine cinématique de l'ensemble du système ne lui permet pas d'effectuer. Les degrés de liberté ainsi offerts au corps (A) lui permettent de bénéficier d'un mouvement et d'un comportement plus fluides face au vent (Voir détail N°1 du dessin N°1) & (dessin N°7). Ce corps (A) dispose d'une forme concave, visant à obtenir un coefficient de résistance aérodynamique (coefficient de trainée, Cx) plus élevé et donc, un maximum de force résultante de vent capté. Par ailleurs, le corps (A) doit avoir un poids le plus léger possible. Pour ce cas, et à titre non limitatif, une partie de sa surface, peut être, par exemple, couverte de voile (Voir dessin N°2).

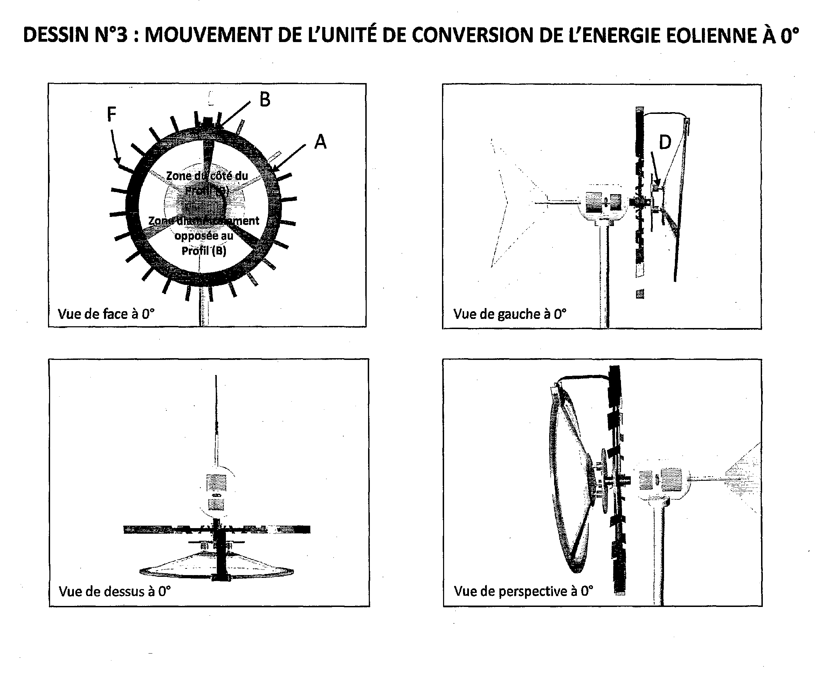

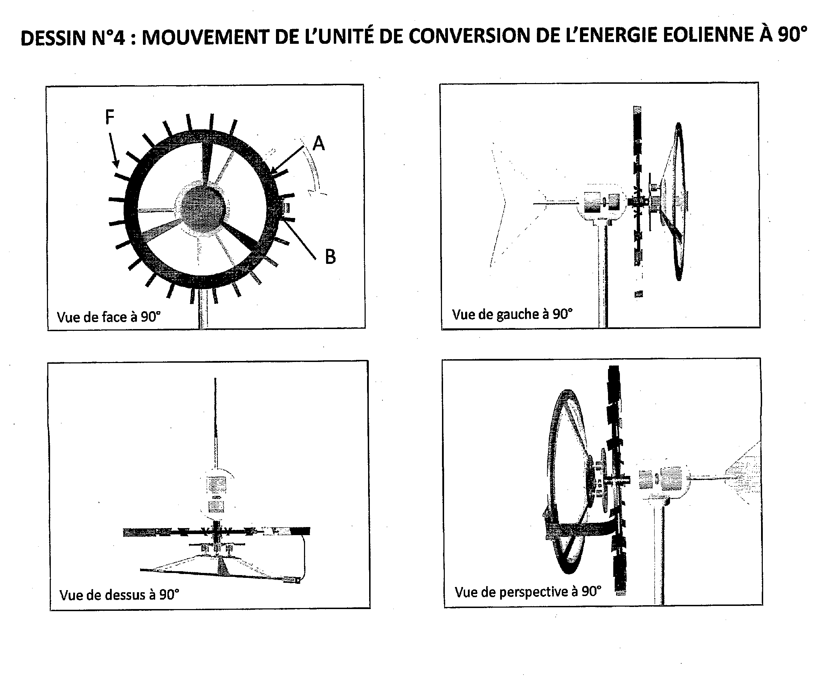

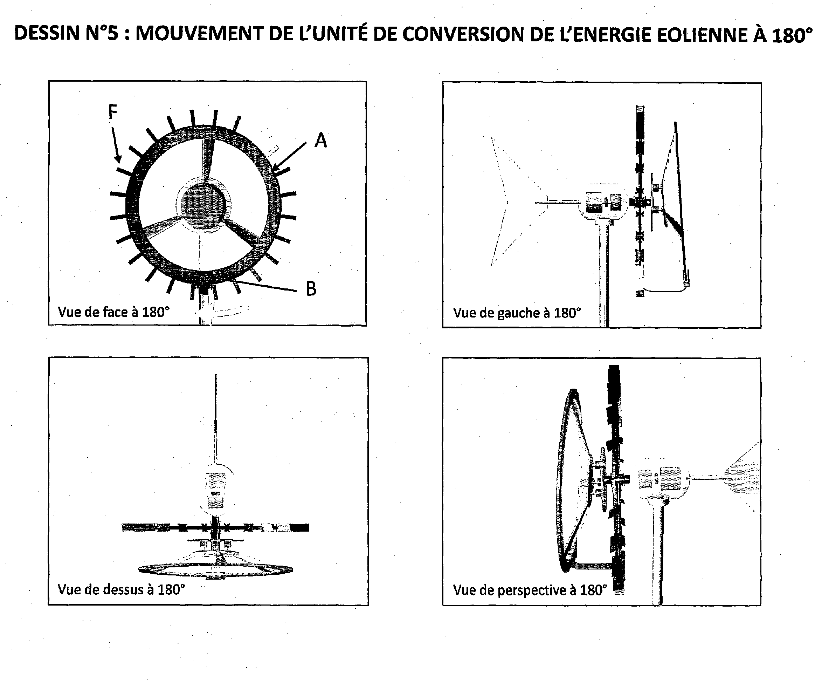

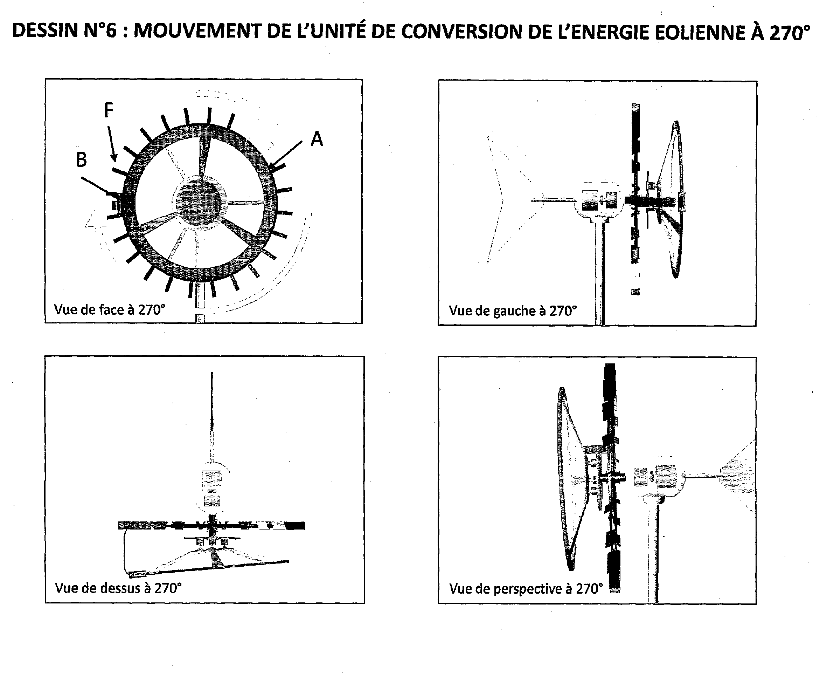

Afin de permettre à la roue (F) de tourner librement et indépendamment du corps (A) qui est exempté de rotation par rapport à l'axe (L), sa surface active (la surface face au vent) est maintenue en permanence exposée au vent (Voir les vues de face des dessins N°3, N°4, N°5 & N°6).

Les fixations des tiges des pistons des vérins à double effet (D) sur le corps (A) doivent être distantes de l'axe qui coïncide avec la direction du vecteur de la force résultante du vent qui attaque le corps (A) (Voir détail N°1 du dessin N°1).

Un bras rigide (C) est encastré d'un côté à la roue (F) et maintenu de l'autre côté, en liaison pivot, à un profil (B) en forme de U. Ayant un mouvement satellite circulaire, ce dernier tourne, par conséquent, avec la roue (F) tout en glissant sur une zone périphérique du corps (A) (Voir dessin N°2). Afin de minimiser les frottements de glissement du profil (B), ce dernier peut être en contact avec les faces de la zone périphérique du corps (A) via des galets ou autres. Par ailleurs, la zone périphérique du corps (A) doit être assez lisse et assez rigide.

Lorsque le vent agit sur le corps (A), ce dernier pivote sans effectuer de rotation, sous l'effet du moment de la force résultante du vent, ayant comme pivot celui du profil (B) ; ainsi le corps (A) pousse, sans coincement, grâce aux liaisons rotule, les tiges des vérins à double effet (D) qui sont présentes dans la zone diamétralement opposée au profil (B). Les tiges des vérins à double effet (D) présentes dans la zone inverse (zone du côté du profil (B)) ont tendance à être tirées (Voir dessin N°3).

Ayant un mouvement satellite circulaire, le profil (B) tourne tout en glissant sur une zone périphérique du corps (A), changeant ainsi le pivot du moment de la force résultante du vent (la liaison pivot du profil (B)) qui s'applique sur le corps (A). Les tiges des vérins à double effet (D) seront, par conséquent, tirées et poussées, tout en ayant un mouvement de translation cyclique (Voir les dessins N°3, N°4, N°5 & N°6). Ainsi, l'énergie éolienne du vent capté par le corps (A) est convertie en énergie mécanique de translation au niveau des pistons des vérins à double effet (D), créant ainsi de la pression hydraulique au niveau de ces derniers. Il est évident pour l'homme du métier que ce mécanisme peut être remplacé par tout autre dispositif permettant de convertir l'énergie mécanique de translation en en énergie hydraulique tels que des vérins à simple effet, des pistons axiaux.

Les vues de face, de gauche, de dessus et de perspective des dessins N°3, N°4, N°5 & N°6 montrent l'action du corps (A) sur les tiges des vérins à double effet (D) ainsi que le comportement du Système (SCEE) face au vent, pour de différentes positions (0°, 90°, 180° & 270°) du Profil (B) sur la zone 1 périphérique du corps (A).

Une nacelle (J) est encastrée à l'axe (L). Cette nacelle (J) contient, principalement, un moteur hydraulique (H) et un générateur électrique (G), qui peuvent être accouplés via un multiplicateur de vitesse (Voir dessin N°1).

Durant les mouvements de va et vient des pistons de la série des vérins à double effet (D), ces derniers poussent un fluide hydraulique vers le circuit hydraulique d'allée en mono-sens, que ce soit en tirant ou en poussant, et ce, grâce à un jeu de clapets (Voir dessin N°7). Ce dernier permet aussi d'aspirer le fluide hydraulique dans les vérins à double effets (D) à travers le circuit hydraulique de retour et ce, en mono-sens « quelque soit le mouvement en tirant ou en poussant ».

Le circuit hydraulique d'allée est connecté à l'entrée d'un moteur hydraulique (H).

Celui de retour, est par ailleurs, connecté à la sortie du moteur hydraulique (H) (Voir dessin N°7). Ainsi, le flux sous pression du fluide hydraulique, est converti en un mouvement de rotation de l'axe du moteur (H), qui est connecté à l'axe du générateur de courant électrique (G), via un multiplicateur de vitesse, générant ainsi de l'énergie électrique propre (Voir dessin N°7). Par ailleurs, il est évident pour l'homme de l'art que le recours au vecteur de transmission hydraulique entre l'énergie mécanique et électrique, offre la possibilité de convertir immédiatement le flux sous pression ainsi obtenu via le moteur hydraulique (H) ou de le stocker sous sa forme hydraulique originelle, pour un usage ultérieur.

Afin de permettre une orientation constante face au vent, le système (SCEE), peut être équipé d'un système d'orientation automatique lui permettant de pivoter sur le mat (I) et de garder le corps (A) et la roue (F) en permanence face au vent, et ce, en mode aval ou amont. Par ailleurs, l'orientation peut être assurée à l'aide d'un gouvernail (K), de dimensions bien déterminées, fixé à travers un support, à la nacelle (J) (Voir dessin N°1). Dans le but de simplifier le fonctionnement de l'orientation du système (SCEE), et à titre non limitatif, la solution du gouvernail (K) est, dans ce cas, retenue comme exemple explicatif.

Ainsi, l'énergie éolienne captée par le corps (A) est convertie en une énergie mécanique de translation, puis de rotation, respectivement via les tiges de la série des vérins (D) et le moteur hydraulique (H). Cette énergie mécanique, est par la suite convertie en énergie électrique à l'aide du générateur électrique (G). Le maillon de cette chaine de conversion énergétique, relatif à la conversion de l'énergie mécanique de translation en énergie mécanique de rotation, peut être assuré et à titre non limitatif, via plusieurs autres mécanismes tels que Bielle-Manivelle ou autres...

Comme annoncé au début de la description technique, ce système (SCEE) n'est pas soumis à la limite théorique de Betz (16/27) et offre un rendement meilleur de conversion d'énergie éolienne. Le seul composant, soumis à la limite de Betz, n'est que la roue (F) qui ne présente qu'une surface active minime par rapport à la surface active totale du système (SCEE). De plus, cette roue (F) ne sert qu'à faire changer la position du profil (B) en un mouvement satellite circulaire et que l'énergie qu'elle capte n'est pas tenue en compte dans la chaine de conversion énergétique, décrite ci-dessus, ni dans l'énergie finale récupérée. Ainsi, la mise en rotation du profil (B) via la roue (F), dont c'est la seule fonction, est assurée par un mécanisme utilisant la quantité d'énergie éolienne attaquant les pales de cette dernière; par conséquent ce dispositif peut être remplacé par d'autres mécanismes susceptibles d'assurer la même fonction de mise en rotation du profil (B).

## Revendications

1. Système de Conversion de l'Energie Eolienne (SCEE) transformant l'énergie cinétique du vent en énergie mécanique puis hydraulique et/ou électrique, est **caractérisé en ce qu'**il comporte : un support (E), encastré à l'axe (L), qui assure la fixation des flasques d'une série de vérins à double effet (D) dont les tiges sont en liaison rotule avec un corps (A) offrant à ce dernier un maximum de degré de liberté dans l'espace ; un bras rigide (C) encastré d'un côté à une roue (F) tournant autour de l'axe (L) et maintenu de l'autre côté en liaison pivot à un profil (B) en forme de U, ainsi lorsque le vent agit sur le corps (A) qui est exempté de rotation par rapport à l'axe (L), ledit corps (A) ,corps récepteur principal de l'énergie éolienne, pivote avec le profil (B) et pousse les tiges des vérins (D), le profil (B) tourne en glissant sur une zone périphérique du corps (A) tout en ayant un mouvement satellite circulaire, changeant ainsi le pivot du moment de la force résultante du vent, qui est en fait la liaison pivot entre le profil (B) et le bras rigide (C), qui s'applique sur le corps (A), ce qui a pour effet de tirer et pousser les tiges des vérins (D), tout en ayant un mouvement de translation cyclique alterné, transformant ainsi l'énergie mécanique transmise en énergie hydraulique encastrée à l'axe (L) ; une nacelle (J) qui contient principalement un moteur hydraulique (H) et un générateur électrique (G) qui peuvent être accouplés via un multiplicateur de vitesse ; un jeu de clapets assure un flux de fluide hydraulique à l'intérieur des circuits hydrauliques «d'allée et de retour» en mono-sens, que ce soit en tirant ou en poussant les pistons des vérins (D) qui sont par ailleurs, liés au moteur hydraulique (H) afin de permettre au système d'être maintenu face au vent et de pivoter sur le mât (I) fixé, via un support, à la nacelle (J).

2. Système de Conversion de l'Energie Eolienne selon la revendication 1 est **caractérisé en ce que** le corps (A) est exempté de rotation par rapport à l'axe (L) et dispose d'une forme concave ayant un coefficient de traînée aérodynamique Cx le plus élevé possible et ce, afin de maximiser la force résultante du vent qui s'applique sur le corps (A).

3. Système de Conversion de l'Energie Eolienne selon la revendication 1 est **caractérisé en ce que** le support (E), qui assure la fixation des flasques d'une série de vérins à double effet (D) dont le nombre qui peut varier, peut être répartie de façon symétrique, dissymétrique ou asymétrique par rapport à l'axe de la force résultante du vent qui s'applique sur le corps (A) et être placés à des distances différentes par rapport à l'axe de la force résultante du vent qui s'applique sur le corps (A).

4. Système de Conversion de l'Energie Eolienne selon les revendications 1 et 3, est **caractérisé en ce que** les vérins à double effets (D) captent l'énergie cinétique du vent transmise par le corps (A) via la translation en va-et-vient de leurs tiges ; lesdits vérins à doubles effets (D) peuvent être remplacés, par des vérins à simples effets, des pistons axiaux ou tout autre mécanisme de conversion de l'énergie mécanique de translation en énergie hydraulique.

5. Système de Conversion de l'Energie Eolienne selon la revendication 1, est **caractérisé en ce que** le profil (B) en forme de «U» tourne autour de l'axe (L) en un mouvement satellite circulaire, tout en glissant sur une zone périphérique du corps (A), zone qui peut, et à titre non limitatif, se trouver à différentes distances de l'axe (L).

6. Système de Conversion de l'Energie Eolienne selon les revendications 1, 2 et 4, est **caractérisé en ce que** l'énergie éolienne captée par le corps (A) qui est convertie en énergie mécanique de translation puis de rotation via les vérins (D), transforme l'énergie ainsi obtenue en énergie hydraulique sous pression vers un circuit hydraulique, qui de par sa nature, offre la possibilité d'être stockée sous sa forme hydraulique originelle pour un usage ultérieur ou d'actionner immédiatement le moteur hydraulique (H).

7. Système de Conversion de l'Energie Eolienne selon les revendications 1 et 2 est **caractérisé en ce que** durant son fonctionnement, le corps (A), exempté de rotation par rapport à l'axe (L), peut avoir une surface habillée, affiche publicitaire ou autres dont le contenu demeure lisible durant le fonctionnement, facilitant ainsi son intégration dans le paysage et assurant une continuité et une homogénéité meilleures avec le milieu naturel, rural et/ou urbain.

8. Système de Conversion de l'Energie Eolienne selon les revendications 1 et 5, est **caractérisé en ce que** la mise en rotation de la roue (F), et donc du profil (B) qui y est encastré, est assurée grâce à la quantité de l'énergie éolienne captée par ladite roue (F), cette quantité d'énergie n'est pas prise en compte dans l'énergie finale récupérée et peut par conséquent être remplacée par tout mécanisme susceptible d'assurer la même fonction de rotation.

9. Système de Conversion de l'Energie Eolienne selon les revendications 1, 4 et 6, est **caractérisé en ce que** l'énergie hydraulique fournie par les vérins (D) et transmise via les circuits hydrauliques «d'aller et de retour» au moteur hydraulique (H), offre la possibilité à ce dernier, et à d'autres éléments, tels que générateur électrique (G), circuit hydraulique, câblage électrique, d'être placés en dehors de la nacelle et à titre non limitatif, sur le sol ou autre, tout en conservant l'inter-connectivité entre les vérins (D) et le moteur (H).

10. Système de Conversion de l'Energie Eolienne selon les revendications 1, 4, 6 et 9, la transmission et la transformation de l'énergie mécanique de translation, des tiges des pistons des vérins (D), en énergie mécanique de rotation de l'arbre du moteur hydraulique (H), se fait via un vecteur d'énergie hydraulique, via le circuit hydraulique d'aller et de retour, cette transmission et cette transformation peuvent se faire par d'autres mécanismes tels que Bielle-Manivelle.

## Patentansprüche

1. System zur Umwandlung von Windenergie (SCEE), das die kinetische Energie des Windes in mechanische Energie und danach in hydraulische und/oder elektrische Energie umwandelt, **dadurch gekennzeichnet, dass** es aufweist: einen in die Achse (L) eingelassenen Halter (E), der die Fixierung der Flansche einer Reihe von Zylindern mit Doppeleffekt (D) sichert, deren Stangen in Kugelbolzenverbindung mit einem Körper (A) sind und diesem einen maximalen Freiheitsgrad im Raum verleihen; einen starren Arm (C), der auf der einen Seite in ein Rad (F) eingelassen ist, das um die Achse (L) dreht und auf der anderen Seite in Drehzapfenverbindung an einem U-förmigen Profil (B) gehalten wird, sodass, wenn der Wind auf den Körper (A) wirkt, der sich im Verhältnis zur Achse (L) nicht dreht, der Körper (A) als Hauptaufnahmekörper der Windenergie mit dem Profil (B) dreht und die Stangen der Zylinder (D) schiebt, das Profil (B) dreht und dabei über eine periphere Zone des Körpers (A) mit einer kreisförmigen Satellitenbewegung gleitet, wodurch der Drehzapfen gemäß dem Moment der resultierenden Kraft des Windes wechselt, der nämlich die Drehzapfenverbindung zwischen dem Profil (B) und dem starren Arm (C) ist, die auf den Körper (A) wirkt, was zur Folge hat, dass die Stangen der Zylinder (D) gezogen und geschoben werden, bei einer zyklisch alternierenden verschiebenden Bewegung, wodurch die übertragene mechanische Energie in hydraulische Energie, eingebaut in die Achse (L), umgewandelt wird; eine Gondel (J), die hauptsächlich einen Hydraulikmotor (H) und einen Stromgenerator (G) enthält, die über einen Geschwindigkeitsvervielfacher gekoppelt sein können; ein Klappenset, das einen Hydraulikfluidstrom in Hin- und Rück-Hydraulikkreisen in eine Richtung sichert, wobei die Kolben der Zylinder (D) entweder gezogen oder geschoben werden, die übrigens mit dem Hydraulikmotor (H) verbunden sind, um dem System zu erlauben, im Wind gehalten zu werden und auf dem Mast (I), der über einen Halter an der Gondel (J) befestigt ist, zu drehen.

2. System zur Umwandlung von Windenergie nach Anspruch 1, **dadurch gekennzeichnet, dass** der Körper (A) im Verhältnis zur Achse (L) nicht dreht und über eine konkave Form mit einem Luftwiderstandskoeffizienten Cx verfügt, der so hoch wie möglich ist, um die resultierende Kraft des Windes, die auf den Körper (A) wirkt, zu maximieren.

3. System zur Umwandlung von Windenergie nach Anspruch 1, **dadurch gekennzeichnet, dass** der Halter (E), der die Befestigung der Flansche einer Reihe von Zylindern mit Doppeleffekt (D) in veränderlicher Anzahl sichert, die symmetrisch, unsymmetrisch oder asymmetrisch im Verhältnis zur Achse der resultierenden Kraft des Windes, die auf den Körper (A) wirkt, verteilt und in unterschiedlichen Abständen im Verhältnis zur Achse der resultierenden Kraft des Windes, die auf den Körper (A) wirkt, platziert sein kann.

4. System zur Umwandlung von Windenergie nach den Ansprüchen 1 und 3, **dadurch gekennzeichnet, dass** die Zylinder mit Doppelwirkung (D) die kinetische Energie des Windes, die von dem Körper (A) über die Hin- und Herverschiebung ihrer Stangen übertragen wird, aufnehmen, wobei die Zylinder mit Doppelwirkung (D) durch Zylinder mit Einfachwirkung, axiale Kolben oder jeden anderen Mechanismus zur Umwandlung von mechanischer Verschiebungsenergie in hydraulische Energie ersetzbar sind.

5. System zur Umwandlung von Windenergie nach Anspruch 1, **dadurch gekennzeichnet, dass** das U-förmige Profil (B) um die Achse (L) in einer kreisförmigen Satellitenbewegung dreht, wobei es über eine periphere Zone des Körpers (A) gleitet, wobei sich diese Zone nicht beschränkend in verschiedenen Abständen von der Achse (L) befinden kann.

6. System zur Umwandlung von Windenergie nach den Ansprüchen 1, 2 und 4, **dadurch gekennzeichnet, dass** die vom Körper (A) aufgenommene Windenergie, die über die Kolben (D) in mechanische Verschiebungsenergie und dann in Rotationsenergie umgewandelt wird, die derart erhaltene Energie in hydraulische Energie unter Druck in Richtung eines Hydraulikkreises verwandelt, die ihrem Wesen entsprechend die Möglichkeit bietet, in ihrer ursprünglichen hydraulischen Form für eine spätere Nutzung gespeichert zu werden oder sofort den Hydraulikmotor (H) zu betätigen.

7. System zur Umwandlung von Windenergie nach den Ansprüchen 1 und 2, **dadurch gekennzeichnet, dass** während seines Betriebs der Körper (A), der nicht im Verhältnis zur Achse (L) rotiert, eine verkleidete Fläche, ein Werbeplakat oder sonstiges haben kann, deren/dessen Inhalt während des Betriebs lesbar bleibt, wodurch seine Integration in die Landschaft erleichtert und eine bessere Kontinuität und Homogenität mit dem natürlichen, ländlichen und/oder städtischen Umfeld sichergestellt wird.

8. System zur Umwandlung von Windenergie nach den Ansprüchen 1 und 5, **dadurch gekennzeichnet, dass** das Inrotationversetzen des Rads (F) und damit des Profils (B), das dort eingebaut ist, dank der Menge an Windenergie sichergestellt wird, die von dem Rad (F) aufgefangen wird, wobei diese Energiemenge bei der zurückgewonnenen Endenergie nicht berücksichtigt wird, und folglich durch jeden Mechanismus ersetzbar ist, der dieselbe Rotationsfunktion erfüllen könnte.

9. System zur Umwandlung von Windenergie nach den Ansprüchen 1, 4, und 6, **dadurch gekennzeichnet, dass** die von den Zylindern (D) gelieferte und über die Hin- und Her-Hydraulikkreise an den Hydraulikmotor (H) übertragene hydraulische Energie dem Motor und anderen Elementen wie dem Stromgenerator (G), dem Hydraulikkreis, der elektrischen Verkabelung die Möglichkeit bietet, außerhalb der Gondel platziert zu sein und nicht beschränkend auf dem Boden oder an anderer Stelle, unter Beibehaltung der Interkonnektivität zwischen den Zylindern (D) und dem Motor (H).

10. System zur Umwandlung von Windenergie nach den Ansprüchen 1, 4, 6 und 9, wobei die Übertragung und Umformung der mechanischen Verschiebungsenergie der Stangen der Kolben der Zylinder (D) in mechanische Rotationsenergie der Welle des Hydraulikmotors (H) über einen Vektor hydraulischer Energie, über den Hin- und Her-Hydraulikkreis erfolgt, wobei diese Übertragung und diese Umformung anhand anderer Mechanismen wie Schubkurbel erfolgen können.

## Claims

1. A wind energy conversion system (WECS) transforming wind kinetic energy into mechanical and then into hydraulic and/or electric energy, **characterized in that** it includes: a support (E) fitted to the axis (L), which ensures the attachment of flanges of a series of dual effect cylinders (D), the rods of which are ball-jointed with a body (A) providing the latter with a maximum of degrees of freedom in space; a rigid arm (C) fitted on one side to a wheel (F) rotating around the axis (L) and held on the other side with a pivot connection to a U-shaped profile (B), thus when the wind acts on the body (A) which is free from rotation relatively to the axis (L), said body (A), the main receptacle body of wind energy, pivots with the profile (B) and pushes the rods of the cylinders (D), the profile (B) rotates by sliding on a peripheral area of the body (A), while having a circular satellite movement thus changing the pivot of the torque of the resulting force of the wind, which in fact is the pivot connection between the profile (B) and the rigid arm (C), which is applied on the body (A), which has the effect of pulling and pushing the rods of the cylinders (D), while having an alternating cyclic translational movement, thereby transforming the transmitted mechanical energy into hydraulic energy, fitted to the axis (L); a nacelle (J) which mainly contains a hydraulic motor (H) and an electric generator (G) which may be coupled via a speed multiplier; a set of valves ensures a one- way flow of hydraulic fluid inside the outward and return hydraulic circuits, whether by pulling or pushing the pistons of the cylinders (D) which are moreover connected to the hydraulic motor (H) in order to allow the system to be held facing the wind and to pivot on the mast (I) attached via a support to the nacelle (J).

2. The wind energy conversion system according to claim 1, **characterized in that** the body (A) is free from rotation relatively to the axis (L) and has a concave shape having an aerodynamic drag coefficient Cx as high as possible and this in the order to maximize the resulting force of the wind which is applied on the body (A).

3. The wind energy conversion system according to claim 1, **characterized in that** the support (E), which ensures the attachment of the flanges of a series of dual effect cylinders (D), the number of which may vary, and which may be distributed symmetrically, dissymmetrically or asymmetrically relatively to the axis of the resulting force of the wind which is applied on the body (A) and be placed at different distances relatively to the axis of the resulting force of the wind which is applied on the body (A).

4. The wind energy conversion system according to claims 1 and 3, **characterized in that** the dual effect cylinders (D) capture the kinetic energy of the wind transmitted by the body (A) via the reciprocal translation of their rods; said dual effect cylinders (D) may be replaced with single-effect cylinders, axial pistons or any other mechanism for converting translational mechanical energy into hydraulic energy.

5. The wind energy conversion system according to claim 1, **characterized in that** the U-shaped profile (B) rotates around the axis (L) in a circular satellite movement, while sliding on a peripheral area of the body (A), which area may, in a non-limiting way, be found at different distances from the axis (L).

6. The wind energy conversion system according to claims 1, 2 and 4, **characterized in that** the wind energy captured by the body (A) which is converted into translational and then rotational mechanical energy via the cylinders (D), transforms the thereby obtained energy into pressurized hydraulic energy towards a hydraulic circuit which, because of its nature, provides the possibility of being stored in its original hydraulic form for subsequent use or of immediately actuating the hydraulic motor (H).

7. The wind energy conversion system according to claims 1 and 2, **characterized in that** during its operation, the body (A), free from rotation relatively to the axis (L), may have a trimmed surface, advertising poster or other, the contents of which remains legible during operation, thereby facilitating its integration into the landscape and ensuring better continuity and homogeneity with the natural, rural and/or urban environment.

8. The wind energy conversion system according to claims 1 and 5, **characterized in that** the setting into rotation of the wheel (F), and therefore of the profile (B) which is fitted therein, is ensured by the amount of wind energy captured by said wheel (F), this amount of energy is not taken into account in the final recovered energy and may therefore be replaced with any mechanism which may ensure the same rotation function.

9. The wind energy conversion system according to claims 1, 4 and 6, **characterized in that** the hydraulic energy provided by the cylinders (D) and transmitted by the outward and return hydraulic circuits to the hydraulic motor (H), gives the possibility to the latter and other elements, such as electric generator (G), hydraulic circuit, electric wiring, of being placed outside the nacelle and in a non-limiting way on the ground or other, while retaining interconnectivity between the cylinders (D) and the motor (H).

10. The wind energy conversion system according to claims 1, 4, 6 and 9, **characterized in that** the transmission and transformation of the translational mechanical energy, of the rods of the pistons of the cylinders (D), into rotational mechanical energy of the shaft of the hydraulic motor (H) is accomplished via a hydraulic energy vector, via the outward and return hydraulic circuit, this transmission and this transformation may be accomplished with other mechanisms such as a crankshaft mechanism.
